# EUROPEAN PATENT SPECIFICATION

(11) **EP 0 505 027 B1**
(45) Date of publication and mention of the grant of the patent: **06.11.1996**
(21) Application number: 92301103.5
(22) Date of filing: 10.02.1992
(51) Int. Cl.: D04H 13/00, B32B 27/12

(54) **Breathable composite barrier fabric**
Luftdurchlässiger Verbundstoff
Etoffe composite perméable

(30) Priority: 22.03.1991 US 673742
(43) Date of publication of application: 23.09.1992
(73) Proprietor: Kappler Safety Group, Guntersville, AL 35976 (US)
(72) Inventor: Langley, John D., Guntersville, Marshall County, AL 35976 (US)
(74) Representative: Coxon, Philip

(56) References cited:
- EP-A- 0 288 874
- EP-A- 0 302 497
- GB-A- 1 387 727
- US-A- 3 738 886
- US-A- 4 828 556

## Description

### Background of the Invention

This invention relates to breathable composite barrier fabrics which are impervious to water-based liquids but which allow passage of water vapor. Applications for such fabrics exist in the field of protective garments for medical technicians, laboratory workers, and the like where it is desired to prevent passage of blood or other body fluids to the body of the worker or from the worker to the patient while allowing passage of water vapor. Garments with such characteristics provide enhanced comfort for the wearer by allowing perspiration to escape, consistent with maintaining a barrier to passage of liquids.

Breathable multi-layer barrier fabrics of various combinations of layered material are disclosed in prior art patents. U.S. Patent No. 4,041,203, issued August 9, 1977, to Brock et al., discloses a fabric made up of a mat of generally discontinuous thermoplastic microfibers as a top layer and a web of substantially continuous, randomly deposited polymer filaments as a bottom layer, the layers being bonded at intermittent discrete regions. A three-layer fabric having a mat layer on the outside and a web layer in the middle is also disclosed. The specific polymer materials used for the mat and the web include polyolefins such as polypropylene. U.S. Patent No. 4,828,556, issued May 9, 1989, to Braun et al., discloses a multi-layer fabric having a first layer of porous melt-blown material, a second layer comprised of a non-microporous film of polyvinyl alcohol, and a third layer of porous non-woven material in the form of a spun-bonded or melt-blown web. The fabric of this reference is said to be useful for absorbent articles such as diapers. Numerous prior patents directed to microporous films are also disclosed and discussed in this reference. Impervious, absorbent barrier fabrics are disclosed in U.S. Patent No. 4,379,192, issued April 5, 1983, to Wahlquist et al., the fabric including layers having continuous filament webs, microfiber mats, and polymeric film, the mats providing an uncompacted absorbent center layer. While numerous combinations of layers of various polymeric materials prepared in a desired physical form are disclosed in these references, the combination of an inner layer of microporous film and outer layers of spun-bonded material as disclosed herein is not known by applicant to have been disclosed or suggested by the prior art.

EP 302 597 discloses a gas-pervious composite film comprising a drawn film composed at a crystalline polyolefin resin, a rubbery polymer and a filler joined to a meshed sheet, such as spun-bonded polyester, by thermal hot roller pressing.

A breathable fabric for protective garments of the type mentioned above should provide for wearer comfort by enabling passage of water vapor resulting from perspiration or humidity in the environment, as well as forming a barrier to passage of liquid water or water-based liquid such as blood or other body fluids. For effectiveness in situations involving handling of a bleeding patient, the barrier should be effective at elevated pressure such as two psig (13.7 kN/m²) to prevent the blood from being projected through the fabric. In addition, strength and durability are desired in the fabric as exemplified by tensile strength of at least 30 pounds (22.7 kg) and a Mullen burst value of at least 50 psi (345 kN/m²). Other characterstics need for such fabric include a relatively low cost obtainable by use of readily available inexpensive materials for the various layers and amenability to preparing the fabric and making garments by inexpensive methods. Also, a cloth-like texture and feel are needed to encourage wearing of the garment.

### Summary of the Invention

In a preferred embodiment, the present invention is directed to breathable composite fabrics made up of an inside layer of a film of polyolefin material in microporous form sandwiched between layers of spun-bonded polyolefin webs. Desired characteristics of the fabrics in terms of vapor transmission, liquid water blockage, and necessary strength are obtained by selecting materials having specified physical properties for the respective layers. The layers are bonded to one another by ultrasonic bonding at spaced-apart points.

Fabrics embodying the invention are effective for use in protective garments where stoppage of fluids such as blood is required, along with enhanced comfort and breathability of vapors produced by perspiration. The fabric may be made up of readily available inexpensive materials for the respective layers, and they are readily fabricated using simple methods.

It is, therefore, an object of this invention to provide a composite fabric that is permeable to water vapor but that serves as a barrier against passage of water-based fluids.

Another object is to provide such a fabric that provides a barrier to passage of blood at slightly elevated pressure.

Yet another object is to provide a breathable composite fabric that may be manufactured at low cost from readily available layer materials.

These objects are met by a fabric as defined in claim 1, with preferred features defined in the dependent claims.

Other objects and advantages of the invention will be apparent from the following detailed description and the appended claims.

### Brief Description of the Drawings

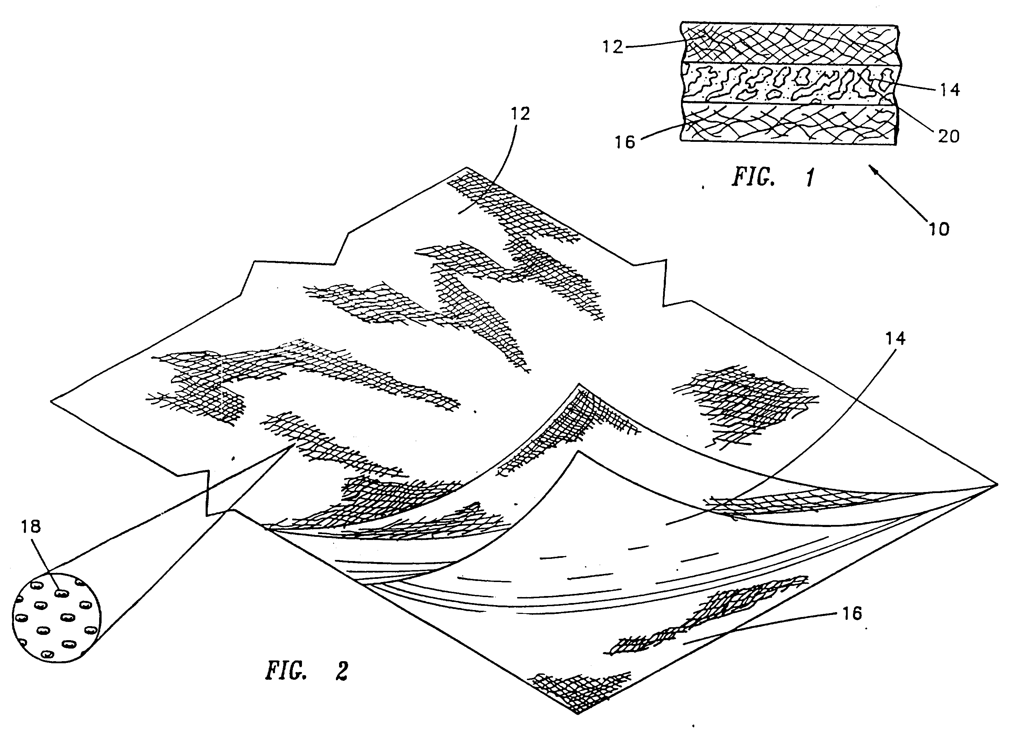

Fig. 1 is a diagrammatic representation of a cross-sectional view of a multi-layer composite fabric embodying the invention.

Fig. 2 is a schematic fragmentary perspective view, with portions peeled away, of the fabric of Fig. 1.

### Description of the Preferred Embodiment

Referring to the drawings, there is shown a breathable composite fabric 10 made up of three layers, a top layer 12 of a spun-bonded polyolefin, a middle layer 14 of a microporous polyolefin film, and a bottom layer 16 of spun-bonded polyolefin. The three layers are secured to one another by ultrasonic bonding at spaced-apart points 18 throughout the fabric surface.

Top layer 12 may comprise a spun-bonded polyolefin, with polypropylene being the preferred material. Polyethylene may also be used. The polypropylene material may have a weight of one-half to two ounces per square yard, with one ounce being particularly preferred. The spun-bonded layers provide strength to the composite fabric, along with a cloth-like surface texture which enhances its use for garments, as contrasted with film materials which have a smooth plastic surface. Spun-bonded polypropylene suitable for this purpose is available from Poly-Bond, Inc., under the designation Poly-bond. Properties of this material are as follows: weight, 1 ounce per square yard (33.9 g/m²); thickness, 7.9 mils (0.79 cm); air permeability, 465 cubic feet air flow per square yard; Mullen burst, 43 (297 kN/m²); grab strength, machine direction, pounds to break, 25 (11.3 kg); cross direction, 17 (7.7 kg), elongation, percent, machine direction, 75; cross direction, 17, and trapezoidal tear strength, machine direction, 7.2 pounds (3.3 kg); cross direction, 4.25 pounds (1.9 kg).

The bottom layer 16 may have the same composition as top layer 12, although material having a lighter weight such as 0.5 ounce per square yard (16.95 g/m²) may be used to reduce the overall fabric weight.

The middle layer 14 may comprise a microporous film of a polyolefin and preferably propylene. Polyethylene may also be used. The polypropylene films have a microporous structure with extremely small random pores 20 extending through the film matrix, allowing vapor such as water vapor to pass through, while forming a barrier to passage of liquids. A suitable film material is available from 3M Disposable Products Division under the designation, "Scotch" microporous film." Properties of a designated film suitable for use in this invention are as follows: thickness, 1.5 mil (0.15 cm); weight, 0.85 ounce per square yard (28.89 g/m²); tensile strength at break (DPD Test Method 106), machine direction, 2,000g/25mm; cross direction, 950 grams/25mm; elongation at break (DPD Test Method 106), machine direction, greater than 100 percent, cross direction, greater than 100 percent. Permeation/barrier properties include a moisture vapor transmission rate of greater than 5,000 grams per square meter at 75° F (42 °C). and 50 percent relative humidity as measured by the inverted cup method; air permeability, less than 400 seconds/50 cc by Gurley Densometer® measurement and water hold-out, greater than 65 pounds per square inch (448 kN/m²) as measured by Mullen burst test. Other microporous films having a moisture vapor transmission rate of greater than 1,500 g/m²/24 hr. at 86° F (47.7°C). and 48 percent relative humidity as measured by ASTM E96 and water holdout greater than 50 psi (345 kN/m²) are acceptable.

Composite fabrics may be prepared by forming a stacked array of the respective layers and bonding them together under heat and pressure at discrete, spaced-apart sites by use of ultrasonic point bonding techniques such as pinsonic bonding. This produces a strong and durable fabric, consistent with the avoidance of creating enough fused areas to interfere with vapor transmission.

The invention is illustrated by the following example:

A composite three-layered fabric was prepared by providing a stacked array having a middle layer of a 1.5 mil (0.15 cm) thick layer of microporous polypropylene film and top and bottom layers of 1.0 oz./square yard (33.9 g/m²) spun-bonded polypropylene material and securing the layers together by ultrasonic point bonding. Samples of the fabric were subjected to liquid penetration tests by being exposed to a liquid for 5 minutes at atmospheric pressure, one minute at 2 psig (13.7 kN/m²), and 54 minutes at atmospheric pressure. For liquid tap water (73 dynes/cm (73 mn/m)), no penetration was observed. Liquid synthetic blood (40 dynes/cm (40 mn/m)) showed no penetration under the same test conditions, except for one failure out of 10 samples -when exposed for 2 minutes at 2 psig (13.7 kN/m²), this failure resulting from an apparent pin hole. Liquid isopropyl alcohol showed no penetration at 5 minutes under atmospheric pressure but did show penetration at 2 minutes under 2 psig (13.7 kN/m²).

Strength properties of samples of the fabric were determined using test methods specified in ASTM D-751. Results obtained were as follows: Mullen burst (psi) 75.0 (517 kN/m²); tensile test (pounds) (machine direction) 39.6 (17.9 kg); (cross direction) 39.6 (17.9 kg); trap tear (pounds) (machine direction) 23.4 (10.6 kg); (cross direction) 15.6 (7.1 kg).

Moisture vapor transmission rates through the fabric were determined by exposing a sample to 50 percent relative humidity air at 86.4° F (48°C). using ASTM E96 test procedure. A transmission rate of 1973 g/m²/24 hrs. was obtained. The results obtained demonstrate effectiveness of the fabric in terms of providing a barrier to water-based liquids while allowing transmission of water vapor such as to enable breathability.

## Claims

1. A non-woven composite fabric comprising:
a layer of microporous film having at least one film surface thermally bonded to a layer of spun-bonded polyolefin, characterised in that the microporous film is polypropylene and that said film and layers are thermally bonded to one another by ultrasonic point bonding at multiple spaced-apart locations;
said non-woven composite fabric providing a barrier to passage of liquids while allowing water vapor to be transmitted therethrough.

2. A non-woven composite fabric according to Claim 1, wherein the polypropylene microporous film has a layer of the spun-bonded polyolefin thermally bonded to a top surface of the microporous film and a bottom surface of the microporous film.

3. A non-woven composite fabric according to claim 1 or 2 wherein said layers of spun-bonded polyolefin are comprised of polypropylene.

4. A non-woven composite fabric according to any one of the preceding claims wherein said microporous film has a moisture vapor transmission rate of greater than 1,500 grams per square meter per 24 hours at 75°F (41.7°C) and 48 percent relative humidity and water hold-out greater than 65 pounds per square inch (448 kN/m²) as measured by the Mullen burst test.

5. A non-woven composite fabric according to anyone of the preceding claims wherein said spun-bonded layers have a grab strength in machine direction of at least 25 pounds (11.3kg) to break, cross direction of at least 17 pounds (7.7kg) to break, and an elongation value of at least 75 percent machine direction and at least 17, cross direction.

6. A non-woven composite fabric according to claim 4 wherein said microporous film has a thickness of 1.5 mil (0.15cm).

7. A non-woven composite fabric according to claim 5 wherein said spun-bonded layers have a weight of 1 ounce per square yard (33.9 g/m²).

## Patentansprüche

1. Nicht-gewebter Verbundstoff mit einer Lage aus mikroporöser Folie, die mindestens eine Folienoberfläche aufweist, die thermisch mit einer Lage aus gesponnenem Polyolefin verbunden ist, **dadurch gekennzeichnet,** daß die mikroporöse Folie Polypropylen ist und daß diese Folie und die Lagen miteinander durch Ultraschallpunktschweißung an vielen beabstandeten Stellen verbunden sind, so daß der nicht-gewebte Verbundstoff eine Sperre für Flüssigkeiten darstellt, während er für Wasserdampf durchlässig ist.

2. Nicht-gewebter Verbundstoff nach Anspruch 1, **dadurch gekennzeichnet,** daß die mikroporöse Folie aus Polypropylen eine Lage aus gesponnenem Polyolefin aufweist, die thermisch mit einer Oberlage aus mikroporöser Folie und mit einer Unterlage aus mikroporöser Folie verbunden ist.

3. Nicht-gewebter Verbundstoff nach Anspruch 1 oder 2, **dadurch gekennzeichnet,** daß die Lagen aus gesponnenem Polyolefin aus Polypropylen bestehen.

4. Nicht-gewebter Verbundstoff nach einem der vorangehenden Ansprüche, **dadurch gekennzeichnet,** daß die mikroporöse Folie eine Flüssigkeitsdampfdurchlaßrate größer als 1500 g pro m² in 24 st bei 41,7 °C und einer relativen Luftfeuchtigkeit von 48 % aufweist und eine Wasserabstoßung größer als 448 kN/m², gemessen nach dem Mullen Bersttest, besitzt.

5. Nicht-gewebter Verbundstoff nach einem der vorangehenden Ansprüche, **dadurch gekennzeichnet,** daß die gesponnenen Lagen eine Gewebereißfestigkeit in Maschinenrichtung von mindestens 11,3 kg bis zum Bruch, quer dazu von mindestens 7,7 kg bis zum Bruch und ein Längungswert von mindestens 75 % in Maschinenrichtung und von mindestens 17 % quer dazu aufweisen.

6. Nicht-gewebter Verbundstoff nach Anspruch 4, **dadurch gekennzeichnet,** daß die mikroporöse Folie eine Dicke von 0,15 cm aufweist.

7. Nicht-gewebter Verbundstoff nach Anspruch 5, **dadurch gekennzeichnet,** daß die gesponnenen Lagen ein Gewicht von 33,9 g/m² aufweisen.

## Revendications

1. Tissu composite non tissé comprenant :
une couche de film microporeux ayant au moins une surface de film fixée thermiquement à une couche de polyoléfine non tissée, caractérisée en ce que le film microporeux est du polypropylène et en ce que lesdits films et lesdites couches sont thermiquement liés ensemble par liaison par point par ultrasons en des endroits espacés multiples;
ledit tissu composite non tissé fournissant une barrière au passage de liquides, tout en permettant à la vapeur d'eau d'être transférée à travers.

2. Tissu composite non tissé selon la revendicatton 1, dans lequel le film microporeux en polypropylène comporte une couche de la polyoléfine non tissée liée thermiquement à une surface supérieure ou film microporeux et à une surface inférieure du film microporeux.

3. Tissu composite non tissé selon la revendication 1 ou 2, dans lequel lesdites couches de polyoléfine non tissée sont constituées de polypropylène.

4. Tissu composite non tissé selon une quelconque des revendications précédentes, dans lequel ledit film microporeux à une vitesse de transfert de vapeur d'eau supérieure à 1500 grammes par mètre carré par 24 heures à 41,7°C (75°F) et à une humidité relative de 48 pour cent, et une résistance à l'eau supérieure à 448 kN/m² (65 livres par pouce carré), mesurée par un essai de pression intérieure d'éclatement ("Mullen burst test").

5. Tissu composite non tissé selon une quelconque des revendications précédentes, dans lequel lesdites couches non tissées ont une résistance au grab test dans la direction de la machine d'au moins 11,3 kg (25 livres) à la rupture, dans la direction transversale, d'au moins 7,7 kg (17 livres) à la rupture, et une valeur d'allongement d'au moins 75 pour cent dans la direction de la machine, et d'au moins 17, dans la direction transversale.

6. Tissu composite non tissé selon la revendication 4, dans lequel ledit film microporeux a une épaisseur de 0,15 cm (1,5 mils).

7. Tissu composite non tissé selon la revendicaiion 5, dans lequel lesdites couches non tissées ont un poids de 33,9 g/m² (une once par yard carré).
